# EUROPÄISCHE PATENTSCHRIFT

(11) **EP 4 614 320 B1**
(45) Veröffentlichungstag und Bekanntmachung des Hinweises auf die Patenterteilung: **22.04.2026**
(21) Anmeldenummer: 24162328.9
(22) Anmeldetag: 08.03.2024
(51) Int. Cl.: G06F 9/455

(54) **COMPUTERMODUL UND COMPUTERIMPLEMENTIERTES VERFAHREN ZUR DATENÜBERTRAGUNG**
COMPUTER MODULE AND COMPUTER-IMPLEMENTED METHOD FOR DATA TRANSMISSION
MODULE INFORMATIQUE ET PROCÉDÉ MIS EN UVRE PAR ORDINATEUR POUR LA TRANSMISSION DE DONNÉES

(43) Veröffentlichungstag der Anmeldung: 10.09.2025
(73) Patentinhaber: congatec GmbH, 94469 Deggendorf (DE)
(72) Erfinder: Garhammer, Konrad, 94469 Deggendorf (DE); Bergbauer, Andreas, 94469 Deggendorf (DE); Kuehn, Timo, 94469 Deggendorf (DE)
(74) Vertreter: Wolf, Gerhard

(56) Entgegenhaltungen:
- WO-A1-2017/082757
- DE-A1- 102018 200 555
- DE-A1- 102020 213 018
- US-A1- 2013 232 491

## Beschreibung

Die Erfindung betrifft ein Computermodul und ein computerimplementiertes Verfahren zur Datenübertragung unter Verwendung eines Computermoduls.

Computermodule, auch als CoMs (COM: Computer-on-Module) bezeichnet, sind hinlänglich bekannt. Derartige Computermodule werden in embedded-computing-Anwendungen, beispielsweise in industriellen Anlagen etc. verwendet. Sie umfassen eine Platine, auf der zumindest eine Prozessoreinheit, ein Arbeitsspeicher und ggf. ein Grafikprozessor sowie ein Massenspeicher vorgesehen sein kann. Das Computermodul kann über eine elektrische Steckverbindung mit einer Trägerplatine verbunden werden, über die Schnittstellen nach außen bereitgestellt werden.

Derartige Computermodule werden zunehmend in sog. loT-Umgebungen (loT: Internet of Things) verwendet, d.h. beispielsweise zur Anbindung eines externen Geräts, insbesondere einer Maschine, eines Sensors o.ä. an eine IT-Struktur, um Daten des Geräts verarbeiten bzw. das Gerät auch steuern zu können.

Problematisch hierbei ist, dass die Einbindung des externen Geräts in die IT-Struktur für die IT-Sicherheit häufig problematisch ist, da zum einen dadurch ein unerwünschter Zugriff eines Angreifers von außen auf das Gerät möglich ist, zum anderen aber ohne weitere Maßnahmen das Gerät auch auf Daten der IT-Struktur zugreifen kann, was häufig unerwünscht ist.

Die Druckschrift DE 10 2020 213 018 A1 betrifft eine VM-basierte Rechnerarchitektur, wie sie in einem KFZ-Steuergerät zum Einsatz kommt.

Die Druckschrift WO 2017/082757 A1 offenbart ein Computerdatenverarbeitungssystem, mittels dem eine verkehrsoptimierte Kommunikation zwischen den virtuellen Maschinen ermöglicht wird.

Die Druckschrift US 2013/0232491 A1 behandelt die effiziente Kommunikation zwischen virtuellen Maschinen einer physikalischen Maschine.

Die Druckschrift DE 10 2018 200555 A1 offenbart eine Fahrzeugelektronikeinheit mit einer physikalischen Netzwerk-Schnittstelle und mehreren virtuellen Maschinen, die virtuelle Netzwerk-Schnittstellen aufweisen.

Ausgehend hiervon ist es Aufgabe der Erfindung, ein Computermodul anzugeben, das eine sichere und flexible Einbindung des externen Geräts in eine IT-Struktur mit dem Ziel des Datenaustauschs mit dem externen Gerät ermöglicht.

Die Aufgabe wird durch ein Computermodul mit den Merkmalen des unabhängigen Patentanspruchs 1 gelöst. Ein computerimplementiertes Verfahren zum Datentransfer ist Gegenstand des nebengeordneten Patentanspruchs 10. Bevorzugte Ausführungsformen sind Gegenstand der Unteransprüche.

Gemäß einem ersten Aspekt bezieht sich die Erfindung auf ein Computermodul. Das Computermodul umfasst eine Platine mit zumindest einer Prozessoreinheit und einem Arbeitsspeicher. Auf dem Computermodul ist ein Hypervisor installiert. Der Hypervisor stellt zumindest zwei virtuelle Maschinen bereit. Dies bedeutet insbesondere, dass der Hypervisor basierend auf der physisch verfügbaren Hardware eine virtuelle Umgebung mit mehreren virtuellen Maschinen definiert, die dann unabhängig von der tatsächlich vorhandenen Hardware als Basis für die Installation von Betriebssystemen dienen. Der Hypervisor ist insbesondere dazu ausgebildet, die verfügbaren, von den virtuellen Maschinen genutzten Hardwareressourcen zumindest teilweise voneinander zu separieren und damit die Ressourcen einer virtuellen Maschine gegenüber den Ressourcen der anderen virtuellen Maschine zu schützen. Der Hypervisor kann insbesondere für jede virtuelle Maschine einen exklusiv von dieser nutzbaren Arbeitsspeicherbereich reservieren. Zudem kann der Hypervisor einen gemeinsamen Arbeitsspeicherbereich reservieren, der von mehreren virtuellen Maschinen gemeinsam genutzt werden kann.

Eine erste virtuelle Maschine ist mit zumindest einem externen Gerät koppelbar, um Gerätedaten, die von diesem externen Gerät bereitgestellt werden, zu empfangen. Die erste virtuelle Maschine ist vorzugsweise nicht mit einem externen Datennetz, beispielsweise dem Internet, verbunden. Die erste virtuelle Maschine weist ein Datentransferprogramm auf, das dazu konfiguriert ist, Gerätedaten gemäß einem ersten Datenformat zu empfangen. Das Datentransferprogramm kann beispielsweise mehrere unterschiedliche Datenformate empfangen und durch Konfiguration an das Datenformat angepasst werden, das das externe Gerät bereitstellt. Unter dem Begriff "Datenformat" wird insbesondere auch ein Datenprotokoll verstanden.

Das Datentransferprogramm der ersten virtuellen Maschine ist dazu konfiguriert, Gerätenutzdaten aus den empfangenen Gerätedaten zu extrahieren und in einem der ersten virtuellen Maschine zugeordneten Arbeitsspeicherbereich abzuspeichern. In anderen Worten werden aus den empfangenen Gerätedaten Gerätenutzdaten extrahiert und diese Gerätenutzdaten abgespeichert. Dieser Vorgang wird in dem Datentransferprogramm mittels einer ersten Verbindungskonfiguration bewirkt, die angibt, welche Gerätenutzdaten aus den empfangenen Gerätedaten extrahiert und gespeichert werden sollen.

Das Datentransferprogramm der ersten virtuellen Maschine ist dazu konfiguriert, Ausgangsdaten der zweiten virtuellen Maschine bereitzustellen. Die Ausgangsdaten weisen dabei vorzugsweise ein konfigurierbares Ausgangsdatenformat auf.

Gemäß einer ersten Variante werden von der ersten virtuellen Maschine basierend auf den abgespeicherten Gerätenutzdaten Ausgangsdaten gemäß einem zweiten Datenformat bereitgestellt, die Gerätenutzdaten des externen Geräts umfassen. Die Ausgangsdaten werden über ein virtuelles Netzwerk, insbesondere ein gesichertes virtuelles Netzwerk, von der ersten virtuellen Maschine an die zweite virtuelle Maschine übertragen. Gemäß einer anderen Alternative werden von der ersten virtuellen Maschine Gerätenutzdaten, die in dem der ersten virtuellen Maschine zugeordneten Arbeitsspeicherbereich gespeichert sind, an eine Speichereinheit, auf die von der ersten und zweiten virtuellen Maschine zugreifbar ist, übertragen und dort gespeichert. Die zweite virtuelle Maschine ist dazu konfiguriert, die Gerätenutzdaten aus der Speichereinheit auszulesen und auszuwerten und/oder weiterzuverarbeiten.

Der technische Vorteil des Computermoduls besteht darin, dass durch das Zusammenwirken der Funktionalität des Hypervisors und des Datentransferprogramms eine Datenübertragung zwischen dem externen Gerät und der zweiten virtuellen Maschine lediglich über die erste virtuelle Maschine und das Extrahieren der Gerätenutzdaten aus den empfangenen Gerätedaten, deren Abspeicherung und das Ausgeben ohne direkte Durchleitung der Gerätedaten selbst realisiert wird. Dadurch wird eine hohe Datensicherheit erreicht, da ein direkter Datenzugriff von der zweiten virtuellen Maschine auf das externe Gerät und umgekehrt vermieden wird und das Entpacken der Gerätedaten bis zu einer Ebene, auf der die Gerätenutzdaten vorliegen, die unerwünschte Durchleitung von anderen Daten verhindert.

Gemäß einem Ausführungsbeispiel ist das Datentransferprogramm der ersten virtuellen Maschine dazu ausgebildet ist, keine direkte Datendurchleitung von Gerätenutzdaten, die in dem ersten Datenformat vorliegen, an eine Ausgangsschnittstelle zu ermöglichen. Vielmehr werden die Gerätenutzdaten aus dem ersten Datenformat extrahiert, in einem der ersten virtuellen Maschine zugeordneten Arbeitsspeicherbereich abgespeichert und nach einem erneuten Auslesen der Gerätenutzdaten aus diesem Arbeitsspeicherbereich als Ausgangsdaten in einer vorgegebenen Ausgangsdatenkonfiguration bereitgestellt. Dieser Vorgang wird auch als Datenprojektion bezeichnet. Dieses Extrahieren von Gerätenutzdaten, Abspeichern und Bereitstellen von Ausgangsdaten aus den Gerätenutzdaten erfolgt auch dann, wenn das vom externen Gerät bereitgestellte erste Datenformat dem zweiten Datenformat entspricht, das die Ausgangsdaten aufweisen sollen.

Gemäß einem Ausführungsbeispiel ist die Speichereinheit eine externe Speichereinheit, die mit dem Computermodul über eine Datenverbindung koppelbar ist, beispielsweise ein externer Massenspeicher etc. Alternativ ist die Speichereinheit ein gemeinsam von der ersten und zweiten virtuellen Maschine nutzbarer Arbeitsspeicherbereich, der über den Hypervisor bereitgestellt wird.

Gemäß einem Ausführungsbeispiel ist ein Arbeitsspeicherteilbereich des Arbeitsspeicherbereichs, der der ersten virtuellen Maschine zugeordnet ist, exklusiv für das Datentransferprogramm reserviert und ausschließlich das Datentransferprogramm hat Zugriff auf diesen Arbeitsspeicherteilbereich. Dadurch kann die Sicherheit der Datenübertragung weiter erhöht werden, da keine anderen Prozesse, die von der ersten virtuellen Maschine verarbeitet werden, die zwischengespeicherten Gerätenutzdaten verändern können.

Gemäß einem Ausführungsbeispiel ist das Datentransferprogramm dazu konfigurierbar, eine Übertragung von Steuerdaten von der zweiten virtuellen Maschine über die erste virtuelle Maschine an das externe Gerät zu bewirken, und zwar derart, dass die zweite virtuelle Maschine erste Steuerdaten über ein virtuelles Netzwerk an die erste virtuelle Maschine überträgt. Das Datentransferprogramm ist dabei dazu konfigurierbar, die in den ersten Steuerdaten enthaltenen Steuerinformationen zu entpacken und die entpackten Steuerinformationen in einem der ersten virtuellen Maschine zugeordneten Arbeitsspeicherbereich zu speichern. Anschließend werden die gespeicherten Steuerinformationen aus dem der ersten virtuellen Maschine zugeordneten Arbeitsspeicherbereich ausgelesen und in zweite Steuerdaten eingebunden, die ein vom externen Gerät lesbares Datenformat aufweisen. Zuletzt werden die zweiten Steuerdaten an das externe Gerät übertragen. Dadurch ist eine Steuerung des externen Geräts durch die zweite virtuelle Maschine mit reduzierten Sicherheitsrisiken möglich, da keine direkte Übertragung von Steuerinformationen von der zweiten virtuellen Maschine an das externe Gerät erfolgt.

Gemäß einem alternativen Ausführungsbeispiel ist das Datentransferprogramm dazu konfigurierbar, eine Übertragung von Steuerdaten von der zweiten virtuellen Maschine über die erste virtuelle Maschine an das externe Gerät zu bewirken. Die erfolgt derart, dass die zweite virtuelle Maschine in ersten Steuerdaten enthaltene Steuerinformationen in einer Speichereinheit abspeichert, auf die sowohl von der ersten virtuellen Maschine als auch von der zweiten virtuellen Maschine zugreifbar ist. Das Datentransferprogramm ist zudem dazu konfigurierbar, die Steuerinformationen aus der Speichereinheit auszulesen und die ausgelesenen Steuerinformationen in einem der ersten virtuellen Maschine zugeordneten Arbeitsspeicherbereich zu speichern. Das Datentransferprogramm ist zudem dazu konfigurierbar, anschließend die gespeicherten Steuerinformationen aus dem der ersten virtuellen Maschine zugeordneten Arbeitsspeicherbereich auszulesen, in zweite Steuerdaten einzubinden, die ein vom externen Gerät lesbares Datenformat aufweisen und die zweiten Steuerdaten an das externe Gerät zu übertragen. Dadurch ist wiederum eine Steuerung des externen Geräts durch die zweite virtuelle Maschine mit reduzierten Sicherheitsrisiken möglich, da keine direkte Übertragung von Steuerinformationen von der zweiten virtuellen Maschine an das externe Gerät erfolgt.

Gemäß einem Ausführungsbeispiel ist die Speichereinheit eine externe Speichereinheit, die mit dem Computermodul über eine Datenverbindung koppelbar ist. Alternativ ist die Speichereinheit ein gemeinsam von der ersten und zweiten virtuellen Maschine nutzbarer Arbeitsspeicherbereich.

Gemäß einem Ausführungsbeispiel ist der Hypervisor ein bare-metal Hypervisor, auch als Typ-1-Hypervisor bezeichnet. Die Verwendung eines bare-metal Hypervisors hat den technischen Vorteil, dass dieser - im Unterschied zu einem Typ-2-Hypervisor, nicht auf die Kooperation mit einem Host-Betriebssystem angewiesen ist, um die Kontrolle über die Hardware bekommen. Dies ist neben einem Performance-Gewinn auch vorteilhaft für die Sicherheit des Gesamtsystems, da eine Kompromittierung des Systems über das Host-Betriebssystem ausgeschlossen ist.

Gemäß einem Ausführungsbeispiel ist der Hypervisor dazu konfigurierbar, beim Abspeichern von Gerätenutzdaten durch das Datentransferprogramm in einer Speichereinheit, auf die von der ersten und zweiten virtuellen Maschine zugreifbar ist, und zwar von Gerätenutzdaten, die der zweiten virtuellen Maschine als Ausgangsdaten gemäß einer Ausgangsdatenkonfiguration bereitzustellen sind, die zweite virtuelle Maschine zu triggern, um ein eventbasiertes Auslesen der in der Speichereinheit abgespeicherten Gerätenutzdaten durch die zweite virtuelle Maschine zu bewirken. Damit ist eine eventbasierte Abfrage der Gerätenutzdaten durch die zweite virtuelle Maschine ohne eine zyklische Abfrage möglich, und zwar immer dann, wenn das Datentransferprogramm der ersten virtuellen Maschine Gerätenutzdaten in die Speichereinheit geschrieben hat.

Gemäß einem weiteren Aspekt wird ein computerimplementiertes Verfahren zum Datentransfer mittels eines Computermoduls offenbart. Das Computermodul umfasst eine Platine mit zumindest einer Prozessoreinheit und einem Arbeitsspeicher, wobei auf dem Computermodul ein Hypervisor installiert ist. Der Hypervisor stellt zumindest zwei virtuelle Maschinen bereit. Das Verfahren umfasst die folgenden Schritte:
- Empfangen von Gerätedaten gemäß einem ersten Datenformat, die von einem externen Gerät bereitgestellt werden, durch eine erste virtuelle Maschine, die mit dem externen Gerät gekoppelt ist und auf der ein Datentransferprogramm vorgesehen ist;
- Extrahieren von Gerätenutzdaten aus den empfangenen Gerätedaten durch das Datentransferprogramm;
- Abspeichern der entpackten Gerätenutzdaten in einem Arbeitsspeicherbereich, der der ersten virtuellen Maschine zugeordnet ist;
- Bereitstellen von Ausgangsdaten in einer vorgegebenen Ausgangsdatenkonfiguration durch das Datentransferprogramm der ersten virtuellen Maschine, und zwar derart, dass:
   - von der ersten virtuellen Maschine basierend auf den abgespeicherten Gerätenutzdaten Ausgangsdaten gemäß einem zweiten Datenformat bereitgestellt werden, die Gerätenutzdaten des externen Geräts umfassen, und dass die Ausgangsdaten über ein virtuelles Netzwerk von der ersten virtuellen Maschine an die zweite virtuelle Maschine übertragen werden; oder
   - von der ersten virtuellen Maschine Gerätenutzdaten, die in dem der ersten virtuellen Maschine zugeordneten Arbeitsspeicherbereich gespeichert sind, an eine Speichereinheit, auf die von der ersten und zweiten virtuellen Maschine zugreifbar ist, übertragen und dort gespeichert werden und dass die zweite virtuelle Maschine die Gerätenutzdaten aus der Speichereinheit ausliest;
- Auswerten und/oder Weiterverarbeiten der Gerätenutzdaten durch die zweite virtuelle Maschine.

Der technische Vorteil des Verfahrens besteht darin, dass durch das Zusammenwirken der Funktionalität des Hypervisors und des Datentransferprogramms eine hohe Datensicherheit erreicht, da ein direkter Datenzugriff von der zweiten virtuellen Maschine auf das externe Gerät und umgekehrt vermieden wird und das Entpacken der Gerätedaten bis zu einer Ebene, auf der die Gerätenutzdaten vorliegen, die unerwünschte Durchleitung von anderen Daten verhindert.

Gemäß einem Ausführungsbeispiel des Verfahrens leitet das Datentransferprogramm der ersten virtuellen Maschine die Gerätedaten, die in dem ersten Datenformat vorliegen, an eine Ausgangsschnittstelle nicht direkt durch, sondern die Gerätenutzdaten werden aus dem ersten Datenformat extrahiert, abgespeichert und nach einem erneuten Auslesen der Gerätenutzdaten aus der Speichereinheit als Ausgangsdaten in einer vorgegebenen Ausgangsdatenkonfiguration bereitgestellt. Dadurch wird die Sicherheit des Datenübertragungsverfahrens weiter erhöht.

Gemäß einem Ausführungsbeispiel des Verfahrens ist ein Arbeitsspeicherteilbereich des Arbeitsspeicherbereichs, der der ersten virtuellen Maschine zugeordnet ist, exklusiv für das Datentransferprogramm reserviert und ausschließlich das Datentransferprogramm hat Zugriff auf diesen Arbeitsspeicherteilbereich. Dadurch kann die Sicherheit der Datenübertragung weiter erhöht werden, da keine anderen Prozesse, die von der ersten virtuellen Maschine verarbeitet werden, die zwischengespeicherten Gerätenutzdaten verändern können.

Gemäß einem Ausführungsbeispiel des Verfahrens überträgt das Datentransferprogramm Steuerdaten von der zweiten virtuellen Maschine über die erste virtuelle Maschine an das externe Gerät. Dies erfolgt derart, dass die zweite virtuelle Maschine erste Steuerdaten über ein virtuelles Netzwerk an die erste virtuelle Maschine überträgt. Das Datentransferprogramm vollzieht die folgenden Schritte:
- es extrahiert die in den ersten Steuerdaten enthaltenen Steuerinformationen und speichert die extrahierten Steuerinformationen in einem der ersten virtuellen Maschine zugeordneten Arbeitsspeicherbereich;
- es liest die gespeicherten Steuerinformationen aus dem der ersten virtuellen Maschine zugeordneten Arbeitsspeicherbereich aus und bindet sie in zweite Steuerdaten ein, die ein vom externen Gerät lesbares Datenformat aufweisen; und
- es überträgt die zweiten Steuerdaten an das externe Gerät.

Damit kann das externe Gerät unter Einhaltung eines hohen Sicherheitsstandards gesteuert werden.

Gemäß einem alternativen Ausführungsbeispiel des Verfahrens überträgt das Datentransferprogramm Steuerdaten von der zweiten virtuellen Maschine über die erste virtuelle Maschine an das externe Gerät, und zwar derart, dass die zweite virtuelle Maschine in ersten Steuerdaten enthaltene Steuerinformationen in einer Speichereinheit abspeichert, auf die sowohl von der ersten virtuellen Maschine als auch von der zweiten virtuellen Maschine zugreifbar ist. Das Datentransferprogramm ist dazu konfiguriert:
- die Steuerinformationen aus der Speichereinheit auszulesen und die ausgelesenen Steuerinformationen in einem der ersten virtuellen Maschine zugeordneten Arbeitsspeicherbereich abzuspeichern;
- die gespeicherten Steuerinformationen aus dem der ersten virtuellen Maschine zugeordneten Arbeitsspeicherbereich auszulesen und in zweite Steuerdaten einzubinden, die ein vom externen Gerät lesbares Datenformat aufweisen;
- die zweiten Steuerdaten an das externe Gerät zu übertragen.

Dies ermöglicht wiederum eine Steuerung des externen Geräts unter Einhaltung eines hohen Sicherheitsstandards.

Gemäß einem Ausführungsbeispiel des Verfahrens triggert der Hypervisor beim Abspeichern von Gerätenutzdaten durch das Datentransferprogramm in einer Speichereinheit, auf die von der ersten und zweiten virtuellen Maschine aus zugreifbar ist, und zwar von Gerätenutzdaten, die der zweiten virtuellen Maschine als Ausgangsdaten bereitzustellen sind, die zweite virtuelle Maschine, um ein eventbasiertes Auslesen der in der Speichereinheit abgespeicherten Gerätenutzdaten durch die zweite virtuelle Maschine zu bewirken. Damit ist keine regelmäßige Speicherabfrage nötig, sondern der Hypervisor informiert eventbasiert die zweite virtuelle Maschine für ein Auslesen der Gerätenutzdaten.

Unter "Computermodul" im Sinne der vorliegenden Erfindung wird ein Computerboard verstanden, das mittels einer standardisierten elektrischen Steckverbindung mit einem Trägerboard verbindbar ist. Das Computerboard kann neben zumindest einem Prozessor und einem Arbeitsspeicher auch einen Grafikprozessor und/oder einen Massenspeicher aufweisen. Ein solches Computermodul ist u.a. unter der Abkürzung CoM, bekannt, wobei CoM für Computer-on-Module steht.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft und grob schematisch ein Blockschaltbild eines Computermoduls mit einem Hypervisor und zwei virtuellen Maschinen in einem ersten Ausführungsbeispiel;
- Fig. 2: beispielhaft und grob schematisch ein Blockschaltbild eines Computermoduls mit einem Hypervisor und zwei virtuellen Maschinen in einem zweiten Ausführungsbeispiel;
- Fig. 3: beispielhaft und grob schematisch ein Blockschaltbild eines Computermoduls mit einem Hypervisor und drei virtuellen Maschinen;
- Fig. 4: beispielhaft ein Ablaufdiagramm, das die Schritte des Verfahrens zum Datentransfer veranschaulicht.

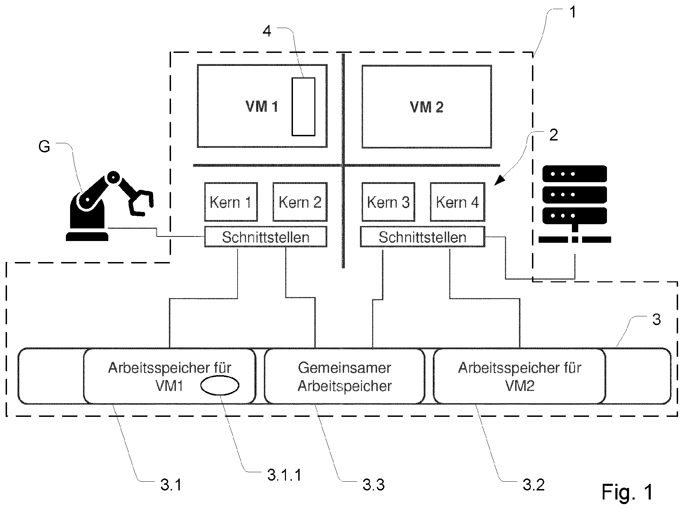

Figur 1 zeigt beispielhaft und grob schematisch ein Computermodul 1. Das Computermodul 1 ist mit einem externen Gerät G gekoppelt, um von diesem Gerätedaten zu empfangen. Das Gerät G kann beispielsweise eine Maschine, ein Sensor oder eine sonstige Daten-generierende Einheit sein. Das Computermodul 1 umfasst zumindest eine Prozessoreinheit 2 und einen Arbeitsspeicher 3.

Auf dem Computermodul 1 ist ein Hypervisor installiert, der den simultanen Betrieb mehrerer Gastsysteme auf dem Computermodul 1 ermöglicht. Der Hypervisor erlaubt es, eine virtuelle Umgebung auf den zur Verfügung stehenden Hardwareressourcen zu definieren, die jeweils als Basis für die Installation eines Betriebssystems und weiteren Applikationen dient.

In dem Ausführungsbeispiel gemäß Fig. 1 sind auf dem Computermodul 1 zwei virtuelle Maschinen VM1, VM2 gebildet, denen über den Hypervisor Hardwareressourcen zugeteilt werden. Die Prozessoreinheit 2 kann insbesondere mehrere Prozessorkerne aufweisen, wobei den virtuellen Maschinen VM1, VM2 unterschiedliche Prozessorkerne zugeordnet sein können. Es versteht sich, dass durch den Hypervisor auch mehr als zwei virtuelle Maschinen auf dem Computermodul 1 realisiert werden können.

Der Arbeitsspeicher 3 kann über den Hypervisor segmentiert sein, wobei der virtuellen Maschine VM1 ein erster Bereich 3.1 des Arbeitsspeichers 3, der virtuellen Maschine VM2 ein zweiter Bereich 3.2 des Arbeitsspeichers 3 zugeordnet ist. Diese Arbeitsspeicherbereiche 3.1, 3.2 können von den jeweiligen virtuellen Maschinen VM1, VM2 jeweils allein benutzt werden, d. h. Lese- bzw. Schreibzugriffe sind lediglich von der jeweiligen virtuellen Maschine möglich, denen der Arbeitsspeicherbereich 3.1, 3.2 zugeordnet ist. Zudem ist im Arbeitsspeicher 3 ein gemeinsamer Arbeitsspeicherbereich 3.3 gebildet, auf den mehrere virtuelle Maschinen VM1, VM2 lesend und/oder schreibend zugreifen können (auch als "shared memory" bezeichnet).

Das Computermodul 1 ist dazu konfigurierbar, über die erste virtuelle Maschine VM1 einen sicheren Datenaustausch zwischen dem externen Gerät G und Applikationen, die auf der zweiten virtuellen Maschine VM2 lauffähig sind, zu bewirken. Um diesen sicheren Datenaustausch zu gewährleisten, ist auf der ersten virtuellen Maschine VM1 ein Datentransferprogramm 4 vorgesehen. Dem Datentransferprogramm 4 ist ein Arbeitsspeicherteilbereich in dem Bereich 3.1 des Arbeitsspeichers, d.h. dem exklusiv für die erste virtuelle Maschine VM1 reservierten Arbeitsspeicher, zugeordnet. Damit kann ausschließlich das Datentransferprogramm 4 diesen Arbeitsspeicherteilbereich nutzen, d. h. lesend und schreibend darauf zugreifen.

Das Datentransferprogramm 4 ist dazu ausgebildet, Gerätedaten des externen Geräts G, die gemäß einem ersten Datenformat bereitgestellt werden, zu empfangen. Das erste Datenformat kann beispielsweise ein analoges oder digitales Signal, ein OPC UA Protokoll, ein REST-Protokoll, ein MQTT-Protokoll, ein PLC-Protokoll, ein ModBus-Protokoll, ein IOLink-Protokoll o.ä. sein.

Das Datentransferprogramm 4 ist zudem dazu ausgebildet, die in den empfangenen Gerätedaten enthaltenen Gerätenutzdaten (beispielsweise Messwerte, Maschineninformationen etc.) zu extrahieren. Dies bedeutet insbesondere, dass das Datentransferprogramm 4 unabhängig von dem Datenformat, das von dem externen Gerät G bereitgestellt wird, die Gerätenutzdaten entpackt, sodass diese in einem gängigen Datenformat zur Verfügung stehen.

Nach dem Extrahieren der Gerätenutzdaten durch das Datentransferprogramm 4 werden diese Gerätenutzdaten in dem Bereich 3.1 des Arbeitsspeichers, der der ersten virtuelle Maschine VM1 zugeordnet ist, insbesondere einem exklusiv für das Datentransferprogramm 4 vorgesehenen Arbeitsspeicherteilbereich 3.1.1, gespeichert. Es sei angemerkt, dass die zweite virtuelle Maschine VM2 keinen Zugriff auf den Bereich 3.1 des Arbeitsspeichers, insbesondere den exklusiv für das Datentransferprogramm 4 vorgesehenen Arbeitsspeicherteilbereich 3.1.1 hat.

Das Datentransferprogramm 4 ist zudem derart konfigurierbar, dass an einer Ausgangsschnittstelle der ersten virtuellen Maschine VM1 Ausgangsdaten bereitgestellt werden, die Gerätenutzdaten, die zuvor in dem Bereich 3.1 des Arbeitsspeichers gespeichert wurden, enthalten. Das Datentransferprogramm 4 kann dabei die Gerätenutzdaten frei konfigurierbar in einem gewünschten Ausgangsdatenformat bereitstellen, und zwar beispielsweise eingebunden in ein zweites Datenformat, beispielsweise ein OPC UA-Protokoll oder ein MQTT-Protokoll. Alternativ kann das Datentransferprogramm 4 das Abspeichern der Gerätenutzdaten in einer Speichereinheit, einer Datenbank oder einer Cloud- Plattform veranlassen.

Über das Datentransferprogramm 4 lassen sich konfigurierbare Datenübertragungen realisieren, und zwar derart, dass vom externen Gerät G bereitgestellte Gerätedaten mittels einer ersten Verbindungskonfiguration verarbeitet werden, um die Gerätenutzdaten zu extrahieren und in dem exklusiv für das Datentransferprogramm 4 vorgesehenen Arbeitsspeicherteilbereich abzuspeichern. Mittels einer zweiten Verbindungskonfiguration lassen sich aus den abgespeicherten Gerätenutzdaten Ausgangsdaten generieren, die von der ersten virtuellen Maschine VM1 ausgegeben werden.

Um die Ausgangsdaten der zweiten virtuellen Maschine VM2 bereitzustellen, werden die Ausgangsdaten in dem Ausführungsbeispiel gemäß Figur 1 in einer Speichereinheit abgespeichert, auf die sowohl die erste virtuelle Maschine VM1 als auch die zweite virtuelle Maschine VM2 Zugriff haben. D.h. das Datentransferprogramm 4 ist dazu konfiguriert, die zunächst in dem exklusiv für das Datentransferprogramm 4 vorgesehenen Arbeitsspeicherteilbereich 3.1.1 abgespeicherten Gerätenutzdaten aus zu lesen und an die Speichereinheit zu übertragen, um die Gerätenutzdaten dort abzuspeichern. Die Speichereinheit ist im gezeigten Ausführungsbeispiel ein gemeinsam von beiden virtuellen Maschinen VM1, VM2 nutzbarer Arbeitsspeicherbereich 3.3. Alternativ kann die Speichereinheit auch eine vom Arbeitsspeicher 3 unabhängige Speichereinheit sein, beispielsweise der Massenspeicher des Computermoduls 1, oder eine externe, mit dem Computermodul 1 verbundene Speichereinheit (Datenbank, Storage etc.).

Die zweite virtuelle Maschine VM2 kann auf die Speichereinheit, insbesondere auf den gemeinsam von beiden virtuellen Maschinen VM1, VM2 nutzbaren Arbeitsspeicherbereich 3.3 zugreifen und damit die Gerätenutzdaten empfangen.

Durch den Hypervisor und das auf der ersten virtuellen Maschine VM1 installierte Datentransferprogramm 4 wird erreicht, dass eine direkte Übertragung der Gerätedaten von dem externen Gerät G an eine Applikation, die auf der zweiten virtuellen Maschine VM2 lauffähig ist, nicht möglich ist, und zwar auch dann nicht, wenn diese Applikation das von dem externen Gerät G bereitgestellte Datenformat direkt verarbeiten könnte. Durch das Datentransferprogramm 4 erfolgt stets eine Datenprojektion, d. h. das Extrahieren der Gerätenutzdaten aus dem ersten Datenformat mittels einer ersten Verbindungskonfiguration, das Zwischenspeichern der Gerätenutzdaten in dem exklusiv für das Datentransferprogramm 4 vorgesehenen Arbeitsspeicherteilbereich 3.1.1 und das Ausgeben der Gerätenutzdaten mittels einer zweiten Verbindungskonfiguration. Dadurch bildet die erste virtuelle Machine VM1 mit dem Datentransferprogramm 4 eine Sicherheitsbarriere, die Sicherheit gegen Angriffe von außen gewährleistet.

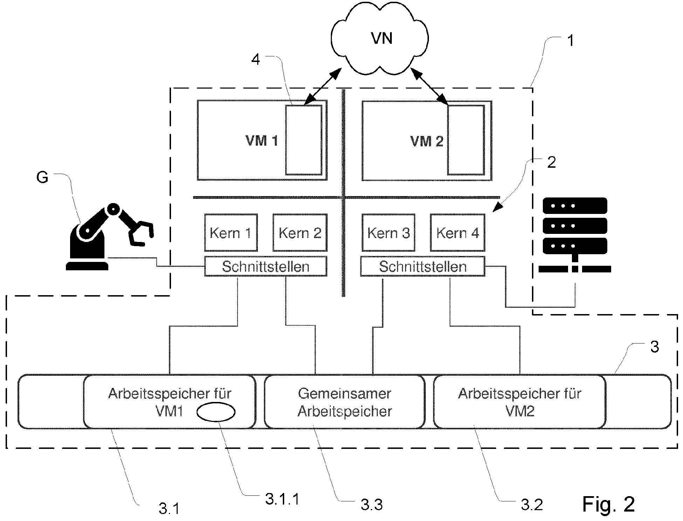

Fig. 2 zeigt ein zweites Ausführungsbeispiel des Computermoduls 1. Nachfolgend werden lediglich die Unterschiede dieses Computermoduls 1 im Vergleich zum Ausführungsbeispiel der Fig. 1 beschrieben. Im Übrigen gelten die vorherigen Ausführungen auch für das Ausführungsbeispiel gemäß Fig. 2.

Der wesentliche Unterschied des Ausführungsbeispiels gemäß Fig. 2 gegenüber dem Ausführungsbeispiels gemäß Fig. 1 besteht darin, dass der Datenaustausch zwischen den virtuellen Maschinen VM1, VM2 nicht über eine Speicherung der Gerätenutzdaten in einer Speichereinheit erfolgt, auf die beide virtuelle Maschinen VM1, VM2 zugreifen können, sondern dass der Datenaustausch über eine Netzverbindung erfolgt.

Die erste virtuelle Maschine VM1 und die zweite virtuelle Maschine VM2 sind über ein virtuelles Netzwerk VN, insbesondere über ein gesichertes virtuelles Netzwerk VN miteinander gekoppelt, so dass eine direkte Datenverbindung zwischen den virtuellen Maschinen VM1, VM2 besteht. Über diese Datenverbindung kann zwischen den virtuellen Maschinen VM1, VM2 eine Datenkommunikation stattfinden, und zwar ohne dass die Daten in einer Speichereinheit, auf die beide virtuelle Maschinen VM1, VM2 Zugriff haben, zwischengespeichert werden müssen.

Um diesen sicheren Datenaustausch zwischen dem externen Gerät G und der virtuellen Maschine VM2 zu gewährleisten, ist auf der ersten virtuellen Maschine VM1 wiederum ein Datentransferprogramm 4 vorgesehen. Dem Datentransferprogramm 4 ist ein Arbeitsspeicherteilbereich 3.1.1 in dem Bereich 3.1 des Arbeitsspeichers, d.h. dem exklusiv für die erste virtuelle Maschine VM1 reservierten Arbeitsspeicher, zugeordnet. Damit kann ausschließlich das Datentransferprogramm 4 diesen Arbeitsspeicherteilbereich 3.1.1 nutzen, d. h. lesend und schreibend darauf zugreifen.

Das Datentransferprogramm 4 ist wiederum dazu konfiguriert, Gerätedaten des externen Geräts G, die gemäß einem ersten Datenformat bereitgestellt werden, zu empfangen. Das Datentransferprogramm 4 ist zudem dazu konfigurierbar, die in den empfangenen Gerätedaten enthaltenen Gerätenutzdaten zu extrahieren und nach dem Extrahieren diese Gerätenutzdaten in dem Bereich 3.1 des Arbeitsspeichers, der der ersten virtuelle Maschine VM1 zugeordnet ist, insbesondere dem exklusiv für das Datentransferprogramm 4 vorgesehenen Arbeitsspeicherteilbereich 3.1.1, zu speichern.

Basierend auf diesen abgespeicherten Gerätenutzdaten können durch das Datentransferprogramm 4 Ausgangsdaten in einem zweiten Datenformat erzeugt und diese Ausgangsdaten an einer Ausgangsschnittstelle der ersten virtuellen Maschine VM1 bereitgestellt werden. Das zweite Datenformat kann dabei gleich oder unterschiedlich zum ersten Datenformat sein, das die vom externen Gerät G bereitgestellten Gerätedaten aufweisen.

Die Ausgangsdaten, die mittels des Datentransferprogramms 4 von der ersten virtuellen Maschine VM1 bereitgestellt werden, können dabei frei konfigurierbar in einem gewünschten Ausgangsdatenformat bereitgestellt, und zwar eingebunden in ein zweites Datenformat, beispielsweise ein OPC UA-Protokoll, ein MQTT-Protokoll o.ä. Dieses Datenformat kann insbesondere abhängig von dem von der zweiten virtuellen Maschine VM2 direkt verarbeitbaren Datenformat gewählt werden.

Diese Ausgangsdaten werden anschließend von der ersten virtuellen Maschine VM1 über das virtuellen Netzwerk VN an die zweite virtuelle Maschine VM2 übermittelt, so dass diese die Ausgangsdaten direkt, d.h. ohne aktiven Zugriff auf eine Speichereinheit empfangen kann. Dadurch wird ein schneller und sicherer Datenaustausch zwischen den virtuellen Maschinen VM1, VM2 erreicht.

Der Datenaustausch zwischen den virtuellen Maschinen VM1, VM2 kann bidirektional erfolgen, und zwar insbesondere derart, dass von der zweiten virtuellen Maschine VM2 über die erste virtuelle Maschine VM1 an das externe Gerät G Informationen, insbesondere Steuerinformationen, übertragen werden.

Die Weitergabe von Steuerinformationen kann gemäß dem Ausführungsbeispiel der Fig. 1 über eine Zwischenspeicherung der Steuerinformationen in einer Speichereinheit, auf den von der ersten und zweiten virtuellen Maschine VM1, VM2 zugegriffen werden kann, insbesondere einem gemeinsamen Arbeitsspeicherbereich 3.3 erfolgen.

Die zweite virtuelle Maschine VM2 speichert die Steuerinformationen in der Speichereinheit, auf die von der ersten und zweiten virtuellen Maschine VM1, VM2 zugegriffen werden kann, insbesondere einem gemeinsamen Arbeitsspeicherbereich 3.3, ab.

Das Datentransferprogramm 4 ist dazu konfigurierbar, die Steuerinformationen aus der Speichereinheit, insbesondere dem gemeinsamen Arbeitsspeicherbereich 3.3, auszulesen und in dem Bereich 3.1 des Arbeitsspeichers, der der ersten virtuelle Maschine VM1 zugeordnet ist, insbesondere einem exklusiv für das Datentransferprogramm 4 vorgesehenen Arbeitsspeicherteilbereich 3.1.1, zu speichern.

Anschließend werden die gespeicherten Steuerinformationen aus dem Bereich 3.1 des Arbeitsspeichers ausgelesen und in Steuerdaten eingebunden, die ein vom externen Gerät G lesbares Datenformat aufweisen. Nach dem Generieren der Steuerdaten werden die Steuerdaten durch das Datentransferprogramm 4 an das externe Gerät G übermittelt.

Die Weitergabe von Steuerinformationen von der zweiten virtuellen Maschine VM2 an das externe Gerät G kann gemäß dem Ausführungsbeispiel der Fig. 2 durch eine Übertragung von ersten Steuerdaten, die von der zweiten virtuellen Maschine VM2 bereitgestellt werden und die die Steuerinformationen aufweisen, über das virtuellen Netzwerk VN an die erste virtuelle Maschine VM1 erfolgen. Die ersten Steuerdaten können in einem ersten Datenformat vorliegen.

Das Datentransferprogramm 4 ist dazu konfiguriert, die im ersten Datenformat bereitgestellten Steuerdaten zu empfangen und die darin enthaltenen Steuerinformationen zu extrahieren. Diese extrahierten Steuerinformationen werden anschließend in dem Bereich 3.1 des Arbeitsspeichers, der der ersten virtuelle Maschine VM1 zugeordnet ist, insbesondere einem exklusiv für das Datentransferprogramm 4 vorgesehenen Arbeitsspeicherteilbereich 3.1.1, gespeichert.

Anschließend werden die gespeicherten Steuerinformationen aus dem Bereich 3.1 des Arbeitsspeichers ausgelesen und in Steuerdaten eingebunden, die ein vom externen Gerät G lesbares Datenformat aufweisen. Nach dem Generieren der Steuerdaten werden die Steuerdaten durch das Datentransferprogramm 4 an das externe Gerät G übermittelt.

Damit kann mittels des Computermoduls 1 eine sichere Datenkommunikation von der zweiten virtuellen Maschine VM2 zu dem externen Gerät G erfolgen, ohne dass die virtuelle Maschine VM2 direkt Steuerdaten an das externe Gerät G schickt.

Der Hypervisor ist vorzugsweise ein sog. bare-metal-Hypervisor. Damit ist zum einen eine Einflussnahme auf die Betriebssysteme der virtuellen Maschinen VM1, VM2 möglich, insbesondere derart, dass eine Triggerung der Betriebssysteme der ersten virtuellen Maschine VM1 möglich ist, wenn sich Zustandsänderungen bei der zweiten virtuellen Maschine VM2 ergeben, oder umgekehrt.

Das Datentransferprogramm 4 ist vorzugsweise dazu konfigurierbar, basierend auf den Gerätenutzdaten oder den Steuerinformationen, die in dem Bereich 3.1 des Arbeitsspeichers, der der ersten virtuelle Maschine VM1 zugeordnet ist, insbesondere einem exklusiv für das Datentransferprogramm 4 vorgesehenen Arbeitsspeicherteilbereich 3.1.1, gespeichert werden, Funktionen auszuführen oder diese zu prüfen bzw. zu analysieren. So können beispielsweise Rechenoperationen vollzogen werden, Schwellwerte geprüft und abhängig von der Prüfung die Weiterleitung der Gerätenutzdaten oder der Steuerinformationen freigegeben blockiert werden. Dadurch ist es möglich, die Sicherheit zusätzlich zu erhöhen, und zwar derart, dass dann, wenn die Gerätenutzdaten oder die Steuerinformationen einen Schwellwert unter- oder überschreiten, die Datenweiterleitung blockiert wird, so dass fehlerhafte Datenübertragungen oder Fehlansteuerungen des externen Geräts vermieden werden können.

Zudem kann das Datentransferprogramm 4 dazu konfiguriert sein, eine Visualisierung der Gerätenutzdaten oder der Steuerinformationen zu ermöglichen. Insbesondere kann das Datentransferprogramm 4 einen Webserver bereitstellen, mittels dem eine webbasierte Datenvisualisierung ermöglicht wird.

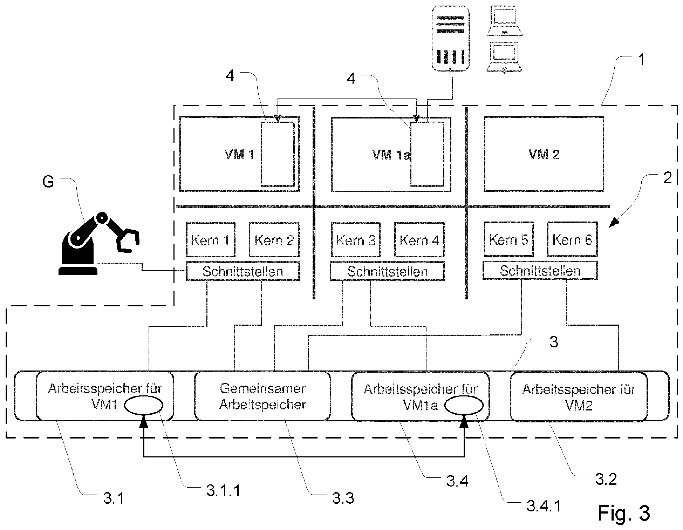

Fig. 3 zeigt ein drittes Ausführungsbeispiel des Computermoduls 1. Nachfolgend werden lediglich die Unterschiede dieses Computermoduls 1 im Vergleich zu den Ausführungsbeispielen der Fig. 1 und 2 beschrieben. Im Übrigen gelten die vorherigen Ausführungen auch für das Ausführungsbeispiel gemäß Fig. 3.

Der wesentliche Unterschied des Computermoduls 1 gemäß Fig. 3 besteht darin, dass der Hypervisor zumindest drei virtuelle Maschinen VM1, VM1a, VM2 bereitstellt, von denen die erste und dritte virtuelle Maschine VM1, VM1a jeweils ein Datentransferprogramm 4 aufweisen. Im gezeigten Ausführungsbeispiel ist die erste virtuelle Maschine VM1 mit einem externen Gerät G verbunden. Das Gerät G ist beispielsweise eine Maschine ist, deren Maschinendaten zu verarbeiten sind. Die dritte virtuelle Maschine VM1a kann beispielsweise mit anderen externen Geräten verbunden sein als die erste virtuelle Maschine VM1, insbesondere mit einem Datenspeicher, einer Cloud oder einem sonstigen IT-System, wie dies in Fig. 3 angedeutet ist.

Die zweite virtuelle Maschine VM2 entspricht der zweiten virtuellen Maschine VM2 in den vorherigen Ausführungsbeispielen gemäß den Figuren 1 und 2, und zwar dahingehend, dass dort ein Gast-Betriebssystem und anwendungsspezifische Applikationen installiert sind, die über den Hypervisor von den ersten und dritten virtuellen Maschine VM1, VM1a getrennt sind. Mittels dieser zweiten virtuelle Maschine VM2 können beispielsweise kundenspezifische Auswertungen der Gerätedaten vorgenommen werden, die über das Datentransferprogramm 4 von der ersten virtuellen Maschine VM1 der zweiten virtuellen Maschine VM2 bereitgestellt werden.

Die dritte virtuelle Maschine VM1a weist ebenso wie die erste virtuelle Maschine VM1 ein Gast-Betriebssystem und einen der dritten virtuellen Maschine VM1a zugewiesenen Arbeitsspeicherbereich 3.4 auf, der exklusiv für die dritte virtuelle Maschine VM1a reserviert ist. Zudem ist auf der dritte virtuelle Maschine VM1a ein Datentransferprogramm 4 installiert. Das Datentransferprogramm 4 weist dieselbe Funktionalität auf wie dies im Zusammenhang mit dem auf der ersten virtuellen Maschine VM1 installierten Datentransferprogramm 4 der Ausführungsbeispiele der Figuren 1 und 2 beschrieben wurde. Insbesondere ist dem Datentransferprogramm 4 der dritten virtuellen Maschine VM1a auf dem Arbeitsspeicherbereich 3.4, der für die dritte virtuelle Maschine VM1a reserviert ist, ein exklusiver Arbeitsspeicherteilbereich 3.4.1 reserviert, der ausschließlich von dem Datentransferprogramm 4 nutzbar ist.

Die Datentransferprogramme 4 der ersten und dritten virtuellen Maschine VM1 und VM1a können Informationen zwischen den Arbeitsspeicherteilbereichen 3.1.1, 3.4.1, die in den für die jeweilige virtuelle Maschine VM1 und VM1a reservierten Arbeitsspeicherbereichen 3.1, 3.4 für die Datentransferprogramme 4 vorgehalten sind, austauschen.

Wie in Fig. 3 mit dem Doppelpfeil gezeigt, können von dem exklusiv für das Datentransferprogramm 4 im ersten Arbeitsspeicherbereich 3.1 reservierten Arbeitsspeicherteilbereich 3.1.1 Informationen an den exklusiv für das Datentransferprogramm 4 im dritten Arbeitsspeicherbereich 3.4 reservierten Arbeitsspeicherteilbereich 3.4.1 übertragen werden oder umgekehrt. Dies kann zum einen über den gemeinsamen Arbeitsspeicherbereich 3.3 erfolgen, wie dies im Zusammenhang mit dem Ausführungsbeispiel in Fig. 1 beschrieben wurde. Zum anderen kann der Datenaustausch auch über ein virtuelles Netzwerk erfolgen, wie dies im Zusammenhang mit dem Ausführungsbeispiel in Fig. 2 beschrieben wurde.

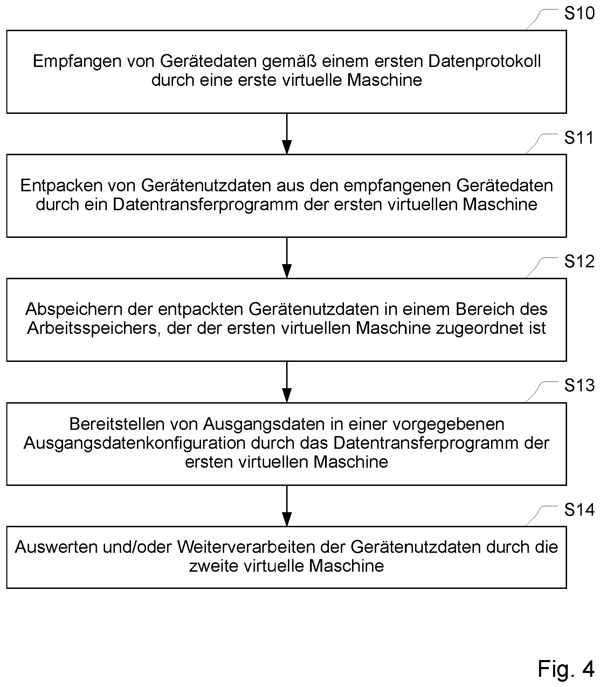

Fig. 4 zeigt ein Blockdiagramm, das die Schritte des Verfahrens zum Datentransfer mittels eines Computermoduls 1 verdeutlicht. Das Computermodul 1 umfasst eine Platine mit zumindest einer Prozessoreinheit und einem Arbeitsspeicher. Auf dem Computermodul ist ein Hypervisor installiert, wobei der Hypervisor zumindest zwei virtuelle Maschinen bereitstellt. Das Verfahren umfasst die folgenden Schritte:
Zunächst werden Gerätedaten gemäß einem ersten Datenformat, die von einem externen Gerät bereitgestellt werden, durch eine erste virtuelle Maschine, die mit dem externen Gerät gekoppelt ist, empfangen. Auf der ersten virtuellen Maschine ist ein Datentransferprogramm vorgesehen (S10).

Aus den empfangenen Gerätedaten werden durch das Datentransferprogramm der ersten virtuellen Maschine Gerätenutzdaten entpackt (S11).

Die entpackten Gerätenutzdaten werden in einem Bereich des Arbeitsspeichers, der der ersten virtuellen Maschine zugeordnet ist, gespeichert (S12).

Zuletzt werden Ausgangsdaten in einer vorgegebenen Ausgangsdatenkonfiguration durch das Datentransferprogramm der ersten virtuellen Maschine bereitgestellt (S13). Dies erfolgt in einer ersten Alternative dadurch, dass von der ersten virtuellen Maschine basierend auf den abgespeicherten Gerätenutzdaten Ausgangsdaten gemäß einem zweiten Datenformat bereitgestellt werden, die Gerätenutzdaten des externen Geräts umfassen, und dass die Ausgangsdaten über ein virtuelles Netzwerk von der ersten virtuellen Maschine an die zweite virtuelle Maschine übertragen werden.

Gemäß einer zweiten Alternative werden von der ersten virtuellen Maschine Gerätenutzdaten, die in dem der ersten virtuellen Maschine zugeordneten Bereich des Arbeitsspeichers gespeichert sind, an eine Speichereinheit, auf die von der ersten und zweiten virtuellen Maschine zugreifbar ist, übertragen und dort gespeichert. Die zweite virtuelle Maschine liest daraufhin die Gerätenutzdaten aus der Speichereinheit aus.

Zuletzt wertet die zweite virtuelle Maschine die Gerätenutzdaten aus und/oder verarbeitet diese weiter (S14).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Computermodul
- 2: Prozessoreinheit
- 3: Arbeitsspeicher
- 3.1: Arbeitsspeicherbereich
- 3.1.1: Arbeitsspeicherteilbereich
- 3.2: Arbeitsspeicherbereich
- 3.3: gemeinsamer Arbeitsspeicherbereich
- 3.4: Arbeitsspeicherbereich
- 3.4.1: Arbeitsspeicherteilbereich
- 4: Datentransferprogramm

- G: Gerät
- VM1: erste virtuelle Maschine
- VM1a: dritte virtuelle Maschine
- VM2: zweite virtuelle Maschine
- VN: virtuelles Netzwerk

## Patentansprüche

1. Computermodul umfassend eine Platine mit zumindest einer Prozessoreinheit (2) und einem Arbeitsspeicher (3), wobei auf dem Computermodul (1) ein Hypervisor installiert ist, wobei der Hypervisor zumindest zwei virtuelle Maschinen (VM1, VM1a, VM2) bereitstellt, wobei eine erste virtuelle Maschine (VM1) mit zumindest einem externen Gerät (G) koppelbar ist, um Gerätedaten, die von diesem externen Gerät (G) bereitgestellt werden, zu empfangen,
wobei die erste virtuelle Maschine (VM1) ein Datentransferprogramm (4) aufweist, das dazu konfiguriert ist, Gerätedaten gemäß einem ersten Datenformat zu empfangen, wobei das Datentransferprogramm (4) der ersten virtuellen Maschine (VM1) dazu konfiguriert ist, Gerätenutzdaten aus den empfangenen Gerätedaten zu extrahieren und in einem der ersten virtuellen Maschine (VM1) zugeordneten Arbeitsspeicherbereich (3.1) abzuspeichern, wobei das Datentransferprogramm (4) der ersten virtuellen Maschine (VM1) dazu konfiguriert ist, Ausgangsdaten in einer vorgegebenen Ausgangsdatenkonfiguration bereitzustellen, und zwar derart, dass:
- von der ersten virtuellen Maschine (VM1) basierend auf den abgespeicherten Gerätenutzdaten Ausgangsdaten gemäß einem zweiten Datenformat bereitgestellt werden, die Gerätenutzdaten des externen Geräts (G) umfassen, und dass die Ausgangsdaten über ein virtuelles Netzwerk (VN) von der ersten virtuellen Maschine (VM1) an die zweite virtuelle Maschine (VM2) übertragen werden, oder
- von der ersten virtuellen Maschine (VM1) Gerätenutzdaten, die in dem der ersten virtuellen Maschine (VM1) zugeordneten Arbeitsspeicherbereich (3.1) gespeichert sind, an eine Speichereinheit, auf die von der ersten und zweiten virtuellen Maschine (VM1, VM2) zugreifbar ist, übertragen und dort gespeichert werden und dass die zweite virtuelle Maschine (VM2) zum Auslesen der Gerätenutzdaten aus der Speichereinheit konfiguriert ist;
wobei die zweite virtuelle Maschine (VM2) dazu konfiguriert ist, die Gerätenutzdaten auszuwerten und/oder weiterzuverarbeiten.

2. Computermodul nach Anspruch 1, **dadurch gekennzeichnet, dass** das Datentransferprogramm (4) der ersten virtuellen Maschine (VM1) dazu ausgebildet ist, keine direkte Datendurchleitung von Gerätenutzdaten, die in dem ersten Datenformat vorliegen, an eine Ausgangsschnittstelle zu ermöglichen, sondern dass die Gerätenutzdaten aus dem ersten Datenformat extrahiert, in einem der ersten virtuellen Maschine (VM1) zugeordneten Arbeitsspeicherbereich (3.1) abgespeichert und nach einem erneuten Auslesen der Gerätenutzdaten aus diesem Arbeitsspeicherbereich (3.1) als Ausgangsdaten in einer vorgegebenen Ausgangsdatenkonfiguration bereitgestellt werden.

3. Computermodul nach Anspruch 1 oder 2, **dadurch gekennzeichnet, dass** die Speichereinheit eine externe Speichereinheit ist, die mit dem Computermodul (1) über eine Datenverbindung koppelbar ist oder dass die Speichereinheit ein gemeinsam von der ersten und zweiten virtuellen Maschine (VM1, VM2) nutzbarer Arbeitsspeicherbereich (3.3) ist.

4. Computermodul nach einem der vorhergehenden Ansprüche, **dadurch gekennzeichnet, dass** ein Arbeitsspeicherteilbereich (3.1.1) des Arbeitsspeicherbereichs (3.1), der der ersten virtuellen Maschine (VM1) zugeordnet ist, exklusiv für das Datentransferprogramm (4) reserviert ist und ausschließlich das Datentransferprogramm (4) Zugriff auf diesen Arbeitsspeicherteilbereich (3.1.1) hat.

5. Computermodul nach einem der vorhergehenden Ansprüche, **dadurch gekennzeichnet, dass** das Datentransferprogramm (4) dazu konfigurierbar ist, eine Übertragung von Steuerdaten von der zweiten virtuellen Maschine (VM2) über die erste virtuelle Maschine (VM1) an das externe Gerät (G) zu bewirken, und zwar derart, dass die zweite virtuelle Maschine (VM2) erste Steuerdaten über ein virtuelles Netzwerk (VN) an die erste virtuelle Maschine (VM1) überträgt, dass das Datentransferprogramm (4) dazu konfigurierbar ist:
- die in den ersten Steuerdaten enthaltenen Steuerinformationen zu extrahieren und die entpackten Steuerinformationen in einem der ersten virtuellen Maschine (VM1) zugeordneten Arbeitsspeicherbereich (3.1) zu speichern;
- die gespeicherten Steuerinformationen aus dem der ersten virtuellen Maschine (VM1) zugeordneten Arbeitsspeicherbereich (3.1) auszulesen und in zweite Steuerdaten einzubinden, die ein vom externen Gerät (G) lesbares Datenformat aufweisen; und
- die zweiten Steuerdaten an das externe Gerät (G) zu übertragen.

6. Computermodul nach einem der Ansprüche 1 bis 4, **dadurch gekennzeichnet, dass** das Datentransferprogramm (4) dazu konfigurierbar ist, eine Übertragung von Steuerdaten von der zweiten virtuellen Maschine (VM2) über die erste virtuelle Maschine (VM1) an das externe Gerät (G) zu bewirken, und zwar derart, dass die zweite virtuelle Maschine (VM2) in ersten Steuerdaten enthaltene Steuerinformationen in einer Speichereinheit abspeichert, auf die sowohl von der ersten virtuellen Maschine (VM1) als auch von der zweiten virtuellen Maschine (VM2) zugreifbar ist, und dass das Datentransferprogramm (4) dazu konfigurierbar ist:
- die Steuerinformationen aus der Speichereinheit auszulesen und die ausgelesenen Steuerinformationen in einem der ersten virtuellen Maschine (VM1) zugeordneten Arbeitsspeicherbereich (3.1) zu speichern;
- die gespeicherten Steuerinformationen aus dem der ersten virtuellen Maschine (VM1) zugeordneten Arbeitsspeicherbereich (3.1) auszulesen und in zweite Steuerdaten einzubinden, die ein vom externen Gerät (G) lesbares Datenformat aufweisen; und
- die zweiten Steuerdaten an das externe Gerät (G) zu übertragen.

7. Computermodul nach Anspruch 6, **dadurch gekennzeichnet, dass** die Speichereinheit eine externe Speichereinheit ist, die mit dem Computermodul (1) über eine Datenverbindung koppelbar ist oder dass die Speichereinheit ein gemeinsam von der ersten und zweiten virtuellen Maschine (VM1, VM2) nutzbarer Arbeitsspeicherbereich (3.3) ist.

8. Computermodul nach einem der vorhergehenden Ansprüche, **dadurch gekennzeichnet, dass** der Hypervisor ein bare-metal Hypervisor ist

9. Computermodul nach einem der vorhergehenden Ansprüche, **dadurch gekennzeichnet, dass** der Hypervisor dazu konfigurierbar ist, beim Abspeichern von Gerätenutzdaten durch das Datentransferprogramm (4) in einer Speichereinheit, auf die von der ersten und zweiten virtuellen Maschine (VM1, VM2) zugreifbar ist, und zwar von Gerätenutzdaten, die der zweiten virtuellen Maschine (VM2) als Ausgangsdaten gemäß einer Ausgangsdatenkonfiguration bereitzustellen sind, die zweite virtuelle Maschine (VM2) zu triggern, um ein eventbasiertes Auslesen der in der Speichereinheit abgespeicherten Gerätenutzdaten durch die zweite virtuelle Maschine (VM2) zu bewirken.

10. Computerimplementiertes Verfahren zum Datentransfer mittels eines Computermoduls (1), das eine Platine mit zumindest einer Prozessoreinheit (2) und einem Arbeitsspeicher (3) umfasst, wobei auf dem Computermodul (1) ein Hypervisor installiert ist, wobei der Hypervisor zumindest zwei virtuelle Maschinen (VM1, VM1a, VM2) bereitstellt, wobei das Verfahren folgende Schritte umfasst:
- Empfangen von Gerätedaten gemäß einem ersten Datenformat, die von einem externen Gerät (G) bereitgestellt werden, durch eine erste virtuelle Maschine (VM1), die mit dem externen Gerät (G) gekoppelt ist und auf der ein Datentransferprogramm (4) vorgesehen ist (S10);
- Extrahieren von Gerätenutzdaten aus den empfangenen Gerätedaten durch das Datentransferprogramm (4) (S11);
- Abspeichern der entpackten Gerätenutzdaten in einem Arbeitsspeicherbereich (3.1), der der ersten virtuellen Maschine (VM1) zugeordnet ist (S12);
- Bereitstellen von Ausgangsdaten in einer vorgegebenen Ausgangsdatenkonfiguration durch das Datentransferprogramm (4) der ersten virtuellen Maschine (VM1) (S13), und zwar derart, dass:
• von der ersten virtuellen Maschine (VM1) basierend auf den abgespeicherten Gerätenutzdaten Ausgangsdaten gemäß einem zweiten Datenformat bereitgestellt werden, die Gerätenutzdaten des externen Geräts (G) umfassen, und dass die Ausgangsdaten über ein virtuelles Netzwerk (VN) von der ersten virtuellen Maschine (VM1) an die zweite virtuelle Maschine (VM2) übertragen werden; oder
• von der ersten virtuellen Maschine (VM1) Gerätenutzdaten, die in dem der ersten virtuellen Maschine (VM1) zugeordneten Arbeitsspeicherbereich (3.1) gespeichert sind, an eine Speichereinheit, auf die von der ersten und zweiten virtuellen Maschine (VM1, VM2) zugreifbar ist, übertragen und dort gespeichert werden und dass die zweite virtuelle Maschine (VM2) die Gerätenutzdaten aus der Speichereinheit ausliest;
- Auswerten und/oder Weiterverarbeiten der Gerätenutzdaten durch die zweite virtuelle Maschine (VM2) (S14).

11. Verfahren nach Anspruch 10, **dadurch gekennzeichnet, dass** das Datentransferprogramm (4) der ersten virtuellen Maschine (VM1) die Gerätedaten, die in dem ersten Datenformat vorliegen, an eine Ausgangsschnittstelle nicht direkt durchleitet, sondern dass die Gerätenutzdaten aus dem ersten Datenformat extrahiert, abgespeichert und nach einem erneuten Auslesen der Gerätenutzdaten aus der Speichereinheit als Ausgangsdaten in einer vorgegebenen Ausgangsdatenkonfiguration bereitgestellt werden.

12. Verfahren nach Anspruch 10 oder 11, **dadurch gekennzeichnet, dass** ein Arbeitsspeicherteilbereich (3.1) des Arbeitsspeicherbereichs (3.1), der der ersten virtuellen Maschine (VM1) zugeordnet ist, exklusiv für das Datentransferprogramm (4) reserviert ist und ausschließlich das Datentransferprogramm (4) Zugriff auf diesen Arbeitsspeicherteilbereich (3.1.1) hat.

13. Verfahren nach einem der Ansprüche 10 bis 12, **dadurch gekennzeichnet, dass** das Datentransferprogramm (4) Steuerdaten von der zweiten virtuellen Maschine (VM2) über die erste virtuelle Maschine (VM1) an das externe Gerät (G) überträgt, und zwar derart, dass die zweite virtuelle Maschine (VM2) erste Steuerdaten über ein virtuelles Netzwerk (VN) an die erste virtuelle Maschine (VM1) überträgt und dass das Datentransferprogramm (4):
- die in den ersten Steuerdaten enthaltenen Steuerinformationen entpackt und die entpackten Steuerinformationen in einem der ersten virtuellen Maschine (VM1) zugeordneten Arbeitsspeicherbereich (3.1) speichert;
- die gespeicherten Steuerinformationen aus dem der ersten virtuellen Maschine (VM1) zugeordneten Arbeitsspeicherbereich (3) ausliest und in zweite Steuerdaten einbindet, die ein vom externen Gerät (G) lesbares Datenformat aufweisen; und
- die zweiten Steuerdaten an das externe Gerät (G) überträgt.

14. Verfahren nach einem der Ansprüche 10 bis 12, **dadurch gekennzeichnet, dass** das Datentransferprogramm (4) Steuerdaten von der zweiten virtuellen Maschine (VM2) über die erste virtuelle Maschine (VM1) an das externe Gerät (G) überträgt, und zwar derart, dass die zweite virtuelle Maschine (VM2) in ersten Steuerdaten enthaltene Steuerinformationen in einer Speichereinheit abspeichert, auf die sowohl von der ersten virtuellen Maschine (VM1) als auch von der zweiten virtuellen Maschine (VM2) zugreifbar ist, und dass das Datentransferprogramm (4):
- die Steuerinformationen aus der Speichereinheit ausliest und die ausgelesenen Steuerinformationen in einem der ersten virtuellen Maschine (VM1) zugeordneten Arbeitsspeicherbereich (3.1) abspeichert;
- die gespeicherten Steuerinformationen aus dem der ersten virtuellen Maschine (VM1) zugeordneten Arbeitsspeicherbereich (3.1) ausliest und in zweite Steuerdaten einbindet, die ein vom externen Gerät (G) lesbares Datenformat aufweisen;
- die zweiten Steuerdaten an das externe Gerät (G) zu überträgt.

15. Verfahren nach einem der Ansprüche 10 bis 14, **dadurch**
**gekennzeichnet, dass** der Hypervisor beim Abspeichern von Gerätenutzdaten durch das Datentransferprogramm (4) in einer Speichereinheit, auf die von der ersten und zweiten virtuellen Maschine (VM1, VM2) aus zugreifbar ist, und zwar von Gerätenutzdaten, die der zweiten virtuellen Maschine (VM2) als Ausgangsdaten gemäß einer Ausgangsdatenkonfiguration bereitzustellen sind, die zweite virtuelle Maschine (VM2) triggert, um ein eventbasiertes Auslesen der in der Speichereinheit abgespeicherten Gerätenutzdaten durch die zweite virtuelle Maschine (VM2) zu bewirken.

## Claims

1. Computer module comprising a circuit board with at least one processor unit (2) and a main memory (3), wherein a hypervisor providing at least two virtual machines (VM1, VM1a, VM2) is installed on the computer module (1), wherein a first virtual machine (VM1) can be coupled to at least one external device (G) in order to receive device data which is provided by this external device (G),
wherein the first virtual machine (VM1) has a data transfer program (4) which is configured to receive device data according to a first data format, wherein the data transfer program (4) of the first virtual machine (VM1) is configured to extract device payload data from the received device data and store it in a main memory area (3.1) assigned to the first virtual machine (VM1), wherein the data transfer program (4) of the first virtual machine (VM1) is configured to provide output data in a predetermined output data configuration in such a way that:
- output data is provided by the first virtual machine (VM1) on the basis of the stored device payload data according to a second data format, which includes device payload data of the external device (G), and that the output data is transmitted via a virtual network (VN) from the first virtual machine (VM1) to the second virtual machine (VM2); or
- device payload data which is stored in the main memory area (3.1) assigned to the first virtual machine (VM1) is transferred from the first virtual machine (VM1) to a memory unit which can be accessed by the first and second virtual machines (VM1, VM2) and stored there, and that the second virtual machine (VM2) is configured to read the device payload data from the memory unit;
wherein the second virtual machine (VM2) is configured to evaluate and/or further process the device payload data.

2. Computer module according to claim 1, **characterized in that** the data transfer program (4) of the first virtual machine (VM1) is configured to not allow direct data transfer of device payload data which is available in the first data format to an output interface, but rather that the device payload data is extracted from the first data format, stored in a main memory area (3.1) assigned to the first virtual machine (VM1), and, after the device payload data is read out again from this main memory area (3.1), is provided as output data in a predetermined output data configuration.

3. Computer module according to claim 1 or 2, **characterized in that** the memory unit is an external memory unit which can be coupled to the computer module (1) via a data connection, or **in that** the memory unit is a main memory area (3.3) which can be used jointly by the first and second virtual machines (VM1, VM2).

4. Computer module according to any one of the preceding claims, **characterized in that** a main memory subarea (3.1.1) of the main memory area (3.1) which is assigned to the first virtual machine (VM1) is reserved exclusively for the data transfer program (4) and only the data transfer program (4) has access to this main memory subarea (3.1.1).

5. Computer module according to any one of the preceding claims, **characterized in that** the data transfer program (4) can be configured to effect a transfer of control data from the second virtual machine (VM2) via the first virtual machine (VM1) to the external device (G) in such a way that the second virtual machine (VM2) transfers first control data via a virtual network (VN) to the first virtual machine (VM1), and **in that** the data transfer program (4) can be configured:
- to extract the control information contained in the first control data and store the extracted control information in a main memory area (3.1) assigned to the first virtual machine (VM1);
- to read the stored control information from the main memory area (3.1) assigned to the first virtual machine (VM1) and incorporate it into second control data having a data format readable by the external device (G); and
- to transfer the second control data to the external device (G).

6. Computer module according to any one of claims 1 to 4, **characterized in that** the data transfer program (4) can be configured to effect a transfer of control data from the second virtual machine (VM2) via the first virtual machine (VM1) to the external device (G) in such a way that the second virtual machine (VM2) stores control information contained in first control data in a memory unit that can be accessed by both the first virtual machine (VM1) and the second virtual machine (VM2), and **in that** the data transfer program (4) can be configured:
- to read the control information from the memory unit and store the read control information in a main memory area (3.1) assigned to the first virtual machine (VM1);
- to read the stored control information from the main memory area (3.1) assigned to the first virtual machine (VM1) and incorporate it into second control data having a data format readable by the external device (G); and
- to transfer the second control data to the external device (G).

7. Computer module according to claim 6, **characterized in that** the memory unit is an external memory unit which can be coupled to the computer module (1) via a data connection, or **in that** the memory unit is a main memory area (3.3) which can be used jointly by the first and second virtual machines (VM1, VM2).

8. Computer module according to any one of the preceding claims, **characterized in that** the hypervisor is a bare-metal hypervisor.

9. Computer module according to any one of the preceding claims, **characterized in that**, when device payload data is stored by the data transfer program (4) in a memory unit, which can be accessed by the first and second virtual machines (VM1, VM2), namely device payload data which should be provided to the second virtual machine (VM2) as output data according to an output data configuration (VM2), the hypervisor can be configured to trigger the second virtual machine (VM2) in order to effect an event-based readout of the device payload data stored in the memory unit by the second virtual machine (VM2).

10. Computer-implemented method for data transfer by means of a computer module (1), which comprises a circuit board with at least one processor unit (2) and a main memory (3), wherein a hypervisor is installed on the computer module (1), wherein the hypervisor provides at least two virtual machines (VM1, VM1a, VM2), wherein the method comprises the following steps:
- receiving device data according to a first data format, which is provided by an external device (G), by a first virtual machine (VM1) which is coupled to the external device (G) and on which a data transfer program (4) is provided (S10);
- extracting device payload data from the received device data by the data transfer program (4) (S11);
- storing the extracted device payload data in a main memory area (3.1) which is assigned to the first virtual machine (VM1) (S12);
- providing output data in a predetermined output data configuration by the data transfer program (4) of the first virtual machine (VM1) (S13) in such a way that:
• the first virtual machine (VM1) provides output data according to a second data format on the basis of the stored device payload data, which comprises device payload data of the external device (G), and that the output data is transferred via a virtual network (VN) from the first virtual machine (VM1) to the second virtual machine (VM2); or
• device payload data which is stored in the main memory area (3.1) assigned to the first virtual machine (VM1) is transferred from the first virtual machine (VM1) to a memory unit which can be accessed by the first and second virtual machines (VM1, VM2), and stored there, and that the second virtual machine (VM2) reads the device payload data from the memory unit;
- evaluating and/or further processing the device payload data by the second virtual machine (VM2) (S14).

11. Method according to claim 10, **characterized in that** the data transfer program (4) of the first virtual machine (VM1) does not directly transfer the device data, which is available in the first data format, to an output interface, but that the device payload data is rather extracted from the first data format, stored, and, after reading the device payload data from the memory unit again, provided as output data in a predetermined output data configuration.

12. Method according to claim 10 or 11, **characterized in that** a main memory subarea (3.1) of the main memory area (3.1) which is assigned to the first virtual machine (VM1) is reserved exclusively for the data transfer program (4) and only the data transfer program (4) has access to this main memory subarea (3.1.1).

13. Method according to any one of claims 10 to 12, **characterized in that** the data transfer program (4) transfers control data from the second virtual machine (VM2) via the first virtual machine (VM1) to the external device (G) in such a way that the second virtual machine (VM2) transfers first control data via a virtual network (VN) to the first virtual machine (VM1) and that the data transfer program (4):
- unpacks the control information contained in the first control data and stores the unpacked control information in a main memory area (3.1) assigned to the first virtual machine (VM1);
- reads the stored control information from the main memory area (3) assigned to the first virtual machine (VM1) and incorporates it into second control data, which has a data format readable by the external device (G); and
- transfers the second control data to the external device (G).

14. Method according to any one of claims 10 to 12, **characterized in that** the data transfer program (4) transfers control data from the second virtual machine (VM2) via the first virtual machine (VM1) to the external device (G) in such a way that the second virtual machine (VM2) stores control information contained in first control data in a memory unit that can be accessed by both the first virtual machine (VM1) and the second virtual machine (VM2), and that the data transfer program (4):
- reads the control information from the memory unit and stores the read control information in a main memory area (3.1) assigned to the first virtual machine (VM1);
- reads the stored control information from the main memory area (3.1) assigned to the first virtual machine (VM1) and incorporates it into second control data, which has a data format which can be read by the external device (G);
- transfers the second control data to the external device (G).

15. Method according to any one of claims 10 to 14, **characterized in that**, when device payload data is stored by the data transfer program (4) in a memory unit that can be accessed by the first and second virtual machines (VM1, VM2), namely device payload data that shall be provided to the second virtual machine (VM2) as output data according to an output data configuration, the hypervisor triggers the second virtual machine (VM2) to effect an event-based readout of the device payload data stored in the memory unit by the second virtual machine (VM2).

## Revendications

1. Module informatique comprenant une platine munie d'au moins une unité centrale de traitement (2) et d'une mémoire vive (3), un hyperviseur étant installé sur le module informatique (1), l'hyperviseur mettant à disposition au moins deux machines virtuelles (VM1, VM1a, VM2), une première machine virtuelle (VM1) pouvant être couplée à au moins un appareil externe (G) afin de recevoir des données d'appareil fournies par cet appareil externe (G), la première machine virtuelle (VM1) comprenant un programme de transfert de données (4) configuré pour recevoir des données d'appareil selon un premier format de données, le programme de transfert de données (4) de la première machine virtuelle (VM1) étant configuré pour extraire des données d'appareil utiles à partir des données d'appareil reçues et pour les stocker dans une zone de mémoire vive (3.1) attribuée à la première machine virtuelle (VM1), le programme de transfert de données (4) de la première machine virtuelle (VM1) étant configuré pour fournir des données de sortie dans une configuration prédéfinie de données de sortie, de telle sorte que :
- la première machine virtuelle (VM1) fournit, sur la base des données d'appareil utiles stockées, des données de sortie selon un deuxième format de données, qui comprennent les données d'appareil utiles de l'appareil externe (G), et les données de sortie sont transmises de la première machine virtuelle (VM1) à la deuxième machine virtuelle (VM2) via un réseau virtuel (VN) ; ou
- depuis la première machine virtuelle (VM1), les données d'appareil utiles qui sont stockées dans la zone de mémoire vive (3.1) attribuée à la première machine virtuelle (VM1) sont transmises vers une unité de mémoire, accessible depuis les première et deuxième machines virtuelles (VM1, VM2), et y sont stockées, et la deuxième machine virtuelle (VM2) est configurée pour lire les données d'appareil utiles dans l'unité de mémoire ;
la deuxième machine virtuelle (VM2) étant configurée pour évaluer et/ou traiter davantage les données d'appareil utiles.

2. Module informatique selon la revendication 1,
**caractérisé en ce que** le programme de transfert de données (4) de la première machine virtuelle (VM1) est conçu pour ne pas permettre le passage direct des données d'appareil utiles, se présentant selon le premier format de données, vers une interface de sortie, mais pour extraire les données d'appareil utiles du premier format de données, les stocker dans une zone de mémoire vive (3.1) attribuée à la première machine virtuelle (VM1) et, après une nouvelle lecture des données d'appareil utiles dans cette zone de mémoire vive (3.1), les fournir en tant que données de sortie dans une configuration prédéfinie de données de sortie.

3. Module informatique selon la revendication 1 ou 2,
**caractérisé en ce que** l'unité de mémoire est une unité de mémoire externe pouvant être couplée au module informatique (1) via une connexion de données, ou
**en ce que** l'unité de mémoire est une zone de mémoire vive (3.3) pouvant être utilisée conjointement par les première et deuxième machines virtuelles (VM1, VM2).

4. Module informatique selon l'une des revendications précédentes,
**caractérisé en ce qu'**une zone partielle de mémoire vive (3.1.1) de la zone de mémoire vive (3.1) qui est attribuée à la première machine virtuelle (VM1) est réservée exclusivement au programme de transfert de données (4), et seul le programme de transfert de données (4) a accès à cette zone partielle de mémoire vive (3.1.1).

5. Module informatique selon l'une des revendications précédentes,
**caractérisé en ce que** le programme de transfert de données (4) peut être configuré pour effectuer une transmission de données de commande de la deuxième machine virtuelle (VM2) vers l'appareil externe (G) via la première machine virtuelle (VM1), de telle sorte que la deuxième machine virtuelle (VM2) transmette des premières données de commande à la première machine virtuelle (VM1) via un réseau virtuel (VN),
et **en ce que** le programme de transfert de données (4) peut être configuré pour:
- extraire les informations de commande contenues dans les premières données de commande et stocker les informations de commande décompressées dans une zone de mémoire vive (3.1) attribuée à la première machine virtuelle (VM1) ;
- lire les informations de commande stockées dans la zone de mémoire vive (3.1) attribuée à la première machine virtuelle (VM1) et les intégrer dans des deuxièmes données de commande qui présentent un format de données lisible par l'appareil externe (G) ; et
- transmettre les deuxièmes données de commande à l'appareil externe (G).

6. Module informatique selon l'une des revendications 1 à 4,
**caractérisé en ce que** le programme de transfert de données (4) peut être configuré pour effectuer une transmission de données de commande de la deuxième machine virtuelle (VM2) vers l'appareil externe (G) via la première machine virtuelle (VM1), de telle sorte que la deuxième machine virtuelle (VM2) stocke les informations de commande, contenues dans les premières données de commande, dans une unité de mémoire accessible à la fois depuis la première machine virtuelle (VM1) et depuis la deuxième machine virtuelle (VM2), et
**en ce que** le programme de transfert de données (4) peut être configuré pour :
- lire les informations de commande dans l'unité de mémoire et stocker les informations de commande lues dans une zone de mémoire vive (3.1) attribuée à la première machine virtuelle (VM1) ;
- lire les informations de commande stockées dans la zone de mémoire vive (3.1) attribuée à la première machine virtuelle (VM1) et les intégrer dans des deuxièmes données de commande qui présentent un format de données lisible par l'appareil externe (G) ; et
- transmettre les deuxièmes données de commande à l'appareil externe (G).

7. Module informatique selon la revendication 6,
**caractérisé en ce que** l'unité de mémoire est une unité de mémoire externe pouvant être couplée au module informatique (1) via une connexion de données, ou
**en ce que** l'unité de mémoire est une zone de mémoire vive (3.3) pouvant être utilisée conjointement par les première et deuxième machines virtuelles (VM1, VM2).

8. Module informatique selon l'une des revendications précédentes,
**caractérisé en ce que** l'hyperviseur est un hyperviseur dit « bare metal ».

9. Module informatique selon l'une des revendications précédentes,
**caractérisé en ce que** lors du stockage des données d'appareil utiles par le programme de transfert de données (4) dans une unité de mémoire accessible depuis les première et deuxième machines virtuelles (VM1, VM2), à savoir des données d'appareil utiles qui doivent être fournies à la deuxième machine virtuelle (VM2) en tant que données de sortie conformément à une configuration de données de sortie, l'hyperviseur peut être configuré pour déclencher la deuxième machine virtuelle (VM2) afin de provoquer une lecture, basée sur les événements, des données d'appareil utiles, stockées dans l'unité de mémoire, par la deuxième machine virtuelle (VM2).

10. Procédé mis en œuvre par ordinateur pour transférer des données à l'aide d'un module informatique (1) comprenant une platine munie d'au moins une unité centrale de traitement (2) et d'une mémoire vive (3), un hyperviseur étant installé sur le module informatique (1), l'hyperviseur mettant à disposition au moins deux machines virtuelles (VM1, VM1a, VM2), le procédé comprenant les étapes suivantes consistant à :
- recevoir des données d'appareil selon un premier format de données, fournies par un appareil externe (G), par une première machine virtuelle (VM1) qui est couplée à l'appareil externe (G) et sur laquelle est prévu un programme de transfert de données (4) (S10) ;
- extraire des données d'appareil reçues les données d'appareil utiles par le programme de transfert de données (4) (S11) ;
- stocker les données d'appareil utiles décompressées dans une zone de mémoire vive (3.1) attribuée à la première machine virtuelle (VM1) (S12) ;
- fournir des données de sortie dans une configuration prédéfinie de données de sortie par le programme de transfert de données (4) de la première machine virtuelle (VM1) (S13), de telle sorte que :
• la première machine virtuelle (VM1) fournit, sur la base des données d'appareil utiles stockées, des données de sortie selon un deuxième format de données, qui comprennent les données d'appareil utiles de l'appareil externe (G), et les données de sortie sont transmises de la première machine virtuelle (VM1) à la deuxième machine virtuelle (VM2) via un réseau virtuel (VN) ; ou
• depuis la première machine virtuelle (VM1), les données d'appareil utiles qui sont stockées dans la zone de mémoire vive (3.1) attribuée à la première machine virtuelle (VM1) sont transmises vers une unité de mémoire, accessible depuis les première et deuxième machines virtuelles (VM1, VM2), et y sont stockées, et la deuxième machine virtuelle (VM2) lit les données d'appareil utiles dans l'unité de mémoire ;
- évaluer et/ou traiter davantage les données d'appareil utiles par la deuxième machine virtuelle (VM2) (S14).

11. Procédé selon la revendication 10,
**caractérisé en ce que** le programme de transfert de données (4) de la première machine virtuelle (VM1) ne fait pas passer directement les données d'appareil, se présentant selon le premier format de données, vers une interface de sortie, mais les données d'appareil utiles sont extraites du premier format de données, stockées et, après une nouvelle lecture des données d'appareil utiles dans l'unité de mémoire, fournies en tant que données de sortie dans une configuration prédéfinie de données de sortie.

12. Procédé selon la revendication 10 ou 11,
**caractérisé en ce qu'**une zone partielle de mémoire vive (3.1) de la zone de mémoire vive (3.1) qui est attribuée à la première machine virtuelle (VM1) est réservée exclusivement au programme de transfert de données (4) et seul le programme de transfert de données (4) a accès à cette zone partielle de mémoire vive (3.1.1).

13. Procédé selon l'une des revendications 10 à 12,
**caractérisé en ce que** le programme de transfert de données (4) transmet des données de commande de la deuxième machine virtuelle (VM2) vers l'appareil externe (G) via la première machine virtuelle (VM1), de telle sorte que la deuxième machine virtuelle (VM2) transmette des premières données de commande à la première machine virtuelle (VM1) via un réseau virtuel (VN) et que le programme de transfert de données (4)
- décompresse les informations de commande, contenues dans les premières données de commande, et stocke les informations de commande décompressées dans une zone de mémoire vive (3.1) attribuée à la première machine virtuelle (VM1) ;
- lit les informations de commande stockées dans la zone de mémoire vive (3) attribuée à la première machine virtuelle (VM1) et les intègre dans des deuxièmes données de commande qui présentent un format de données lisible par l'appareil externe (G) ; et
- transmet les deuxièmes données de commande à l'appareil externe (G).

14. Procédé selon l'une des revendications 10 à 12,
**caractérisé en ce que** le programme de transfert de données (4) transmet des données de commande de la deuxième machine virtuelle (VM2) à l'appareil externe (G) via la première machine virtuelle (VM1), de telle sorte que la deuxième machine virtuelle (VM2) stocke les informations de commande, contenues dans les premières données de commande, dans une unité de mémoire accessible à la fois depuis la première machine virtuelle (VM1) et depuis la deuxième machine virtuelle (VM2), et le programme de transfert de données (4)
- lit les informations de commande dans l'unité de mémoire et stocke les informations de commande lues dans une zone de mémoire vive (3.1) attribuée à la première machine virtuelle (VM1) ;
- lit les informations de commande stockées dans la zone de mémoire vive (3.1) attribuée à la première machine virtuelle (VM1) et les intègre dans des deuxièmes données de commande qui présentent un format de données lisible par l'appareil externe (G) ;
- transmet les deuxièmes données de commande à l'appareil externe (G).

15. Procédé selon l'une des revendications 10 à 14,
**caractérisé en ce que** lors du stockage des données d'appareil utiles par le programme de transfert de données (4) dans une unité de mémoire accessible depuis les première et deuxième machines virtuelles (VM1, VM2), à savoir des données d'appareil utiles qui doivent être fournies à la deuxième machine virtuelle (VM2) en tant que données de sortie conformément à une configuration de données de sortie, l'hyperviseur déclenche la deuxième machine virtuelle (VM2) afin de provoquer une lecture, basée sur les événements, des données d'appareil utiles, stockées dans l'unité de mémoire, par la deuxième machine virtuelle (VM2).
